# FASCICULE DE BREVET EUROPEEN

(11) **EP 2 294 776 B1**
(45) Date de publication et mention de la délivrance du brevet: **01.07.2020**
(21) Numéro de dépôt: 09766039.3
(22) Date de dépôt: 19.05.2009
(51) Int. Cl.: G06F 21/62, H04L 29/06

(54) **PROCÉDÉ ET SYSTÈME D'ACCÈS PAR UN UTILISATEUR À AU MOINS UN SERVICE OFFERT PAR AU MOINS UN AUTRE UTILISATEUR**
VERFAHREN UND SYSTEM FÜR BENUTZERZUGANG ZU MINDESTENS EINEM VON MINDESTENS EINEM ANDEREN BENUTZER ANGEBOTENEN DIENST
METHOD AND SYSTEM FOR USER ACCESS TO AT LEAST ONE SERVICE OFFERED BY AT LEAST ONE OTHER USER

(30) Priorité: 27.05.2008 FR 0853442
(43) Date de publication de la demande: 16.03.2011
(73) Titulaire: ORANGE, 75015 Paris (FR)
(72) Inventeur: BERTIN, Emmanuel, F-14450 Luc-sur-Mer (FR); DESCHREVEL, Jean-Pierre, F-14740 Putot-en-Bessin (FR); HENRY, Katell, F-29200 Brest (FR)
(74) Mandataire: Cabinet Beau de Loménie
(86) Numéro de dépôt international: PCT/FR2009/050934
(87) Numéro de publication internationale: WO 2009/153477

(56) Documents cités:
- EP-A- 1 758 365
- WO-A-2005/045594
- US-A1- 2002 120 757
- THOMAS WASON ET AL: "Liberty ID-FF Architecture Overview (Version: 1.2-errata-v1.0)" LIBERTY ALLIANCE PROJECT, XX, XX, 1 septembre 2004 (2004-09-01), pages 1-44, XP002436096

## Description

La présente invention concerne le domaine du partage de services entre plusieurs utilisateurs, notamment et non exclusivement, dans un contexte de services accessibles au travers un réseau de communication, certains de ces services pouvant par exemple reposer sur les principes du web communautaire, ou bien encore s'inscrire dans un contexte de communications interpersonnelles.

Plus précisément, l'invention vise à introduire une gestion de droit d'accès d'un utilisateur A à des services personnels (par exemple téléphonique, présence) configurés par un utilisateur B, en lien avec une interface utilisateur de type web.

En effet, de plus en plus, les services de télécommunications sont conçus dans une optique de partage communautaire et d'utilisation d'informations personnalisées lors des communications interpersonnelles, ou plus généralement encore, dans une optique de médiation entre un utilisateur et des tiers.

A titre d'exemple illustratif, un service de photo n'a plus uniquement vocation à stocker les photos d'un utilisateur, mais aussi à lui permettre de les partager avec d'autres.

De même, un service de localisation n'a plus uniquement vocation à indiquer à un utilisateur sa localisation, mais aussi à la fournir à des tiers.

Il en est de même pour des services de gestion de présence.

Des services plus anciens comme la téléphonie entrent également dans ce cadre : un service de téléphonie permet à des tiers de contacter un utilisateur.

Dans tous ces services, il y a un besoin de contrôle par l'utilisateur qui va rendre accessible à d'autres utilisateurs des services qu'il a préalablement configuré et/ou personnalisé.

Dans le domaine de la téléphonie RTC, l'accès au service de téléphonie est en principe public : tout le monde peut accéder aux numéros de téléphone référencés dans un annuaire.

Dans le domaine de la téléphonie mobile, on passe à une restriction de l'accès par la diffusion du numéro de téléphone mobile : l'utilisateur peut choisir, soit de publier son numéro dans un annuaire pour le rendre accessible à tout le monde, soit de le transmettre uniquement aux personnes qu'il autorise à le contacter par ce moyen, via son téléphone mobile.

Pour ce qui concerne les services de présence ou de localisation, on utilise une autorisation nominative des personnes qui peuvent accéder à la présence ou à la localisation, d'un utilisateur du service, ces personnes étant caractérisées par un de leurs identifiants personnel, auprès du service de présence/localisation.

D'autres services, par exemple du type "social networking" (pour "réseau social" en français), combinent un annuaire où l'on peut rechercher des amis (par exemple d'après un de leurs identifiants (souvent le nom ou le prénom), ou via l'appartenance à un réseau, ou via des centres d'intérêts) et accéder ainsi dans un premier temps à leur profil public, puis demander une autorisation nominative pour accéder au profil privé.

Cependant, dans tous les services précités, c'est le service lui-même qui gère les autorisations d'accès.

De plus, pour ce qui concerne les services de communication (de téléphonie, de présence...), les solutions existantes de gestion de l'accès aux services se basent sur une connaissance centralisatrice des acteurs qui interviennent dans les services.

Un utilisateur exprime des droits d'accès à ses données et configure ses services à partir de la connaissance qu'il a ou qu'il peut obtenir de ses interlocuteurs, par exemple sur la base d'un identifiant de joignabilité, par exemple un numéro de téléphone.

L'histoire des interactions entre utilisateurs intervient aussi dans cette base de connaissances. Un accord peut être établi entre utilisateurs sur leur inclusion en listes d'amis. Des interactions peuvent avoir eu lieu par le passé.

Ces données sont aussi actuellement utilisées pour déterminer des droits d'accès.

Dans les services de partage de données personnelles (par exemple de photo), des solutions connues de l'art antérieur utilisent l'envoi d'invitations contenant un lien d'accès, mais ces solutions sont spécifiques à chaque service. Octroyer des droits d'accès à N services nécessite donc l'envoi de N invitations via N interfaces différentes, et qui seront reçues et gérées de N façons différentes par le récepteur.

Les techniques antérieures présentent principalement l'ensemble des limitations suivantes :
- l'utilisateur doit avoir une compréhension des différents systèmes qu'il va pouvoir utiliser pour mettre en place ses droits d'accès ;
- il doit aussi connaître les identifiants de joignabilité de ses interlocuteurs pour adapter ses systèmes en fonction de ces données;
- il n'est pas possible de mettre en place des contrôles d'accès si on ne connaît pas à priori les identifiants de joignabilité de ses interlocuteurs.

Le document US2002/120757 A1 datant du 29 août 2002 divulgue un système délivrant des permissions groupées par email à des utilisateurs de communautés sur Internet pour accéder à des ressources partagées.

Le document EP 1 758 365 A datant du 28 février 2007 porte sur le partage d'images numériques dans un réseau de communication.

La présente invention est définie dans le jeu de revendications ci-joint.

L'invention propose une solution nouvelle qui ne présente pas l'ensemble de ces inconvénients de l'art antérieur, sous la forme d'un procédé d'accès par au moins un deuxième utilisateur, à au moins un service offert par un premier utilisateur.

Selon l'invention, un tel procédé comprend :
une étape de génération, par un premier dispositif de gestion d'invitations propre au premier utilisateur, d'au moins une invitation comprenant un niveau d'accès défini par ledit premier utilisateur pour permettre audit au moins un deuxième utilisateur d'accéder audit au moins un service;
une étape de transmission, par ledit premier dispositif de gestion d'invitations, d'une dite invitation à un deuxième dispositif de gestion d'invitations propre à un deuxième utilisateur;
une étape de fourniture, par le deuxième dispositif de gestion d'invitations, de ladite invitation à un serveur de privilèges;
une étape de vérification, par le un serveur de privilèges, du contenu de ladite au moins une invitation, délivrant audit deuxième dispositif de gestion d'invitations au moins un jeton d'autorisation d'accès pour accéder audit au moins un service, fonction dudit niveau d'accès;
une étape de demande d'accès audit au moins un service par ledit deuxième dispositif de gestion d'invitations, à partir dudit jeton d'autorisation d'accès.

L'invention propose donc un procédé mutualisé d'accès d'au moins un deuxième utilisateur à des services mis à sa disposition par un premier utilisateur, ledit procédé tenant compte de droits d'accès préalablement définis par le premier utilisateur pour le deuxième utilisateur dans une invitation transmise à ce dernier et l'invitant à accéder auxdits services.

L'invention permet avantageusement de s'affranchir de la connaissance à priori de l'environnement et des interlocuteurs d'un service, le principe de l'invention reposant sur l'utilisation de coupons d'invitation produits par l'utilisateur et transmis par ce dernier à ses différents interlocuteurs (connus et/ou non connus, indifféremment) pour leur permettre d'accéder à ses données ou à ses services qu'il souhaite partager de manière plus ou moins restrictive.

Par accès à au moins un service, on entend aussi bien l'accès à des services applicatifs gérés par un premier utilisateur, que l'accès à des données personnelles mises à la disposition, ou tout au moins rendues accessibles à, d'autres utilisateurs, sur invitation, par ce premier utilisateur.

L'invention permet encore à un deuxième utilisateur de pouvoir transmettre une invitation à partir d'une autre invitation qu'il aura préalablement reçue d'un premier utilisateur. Le scénario suivant est donné à titre de simple exemple illustratif et non limitatif d'un tel cas de figure :
- un utilisateur A publie une invitation publique;
- l'utilisateur B rencontre un utilisateur A;
- B utilise l'invitation publique de A pour l'ajouter à son carnet d'adresses ou plus généralement à ses contacts;
- B envoie une invitation spécifique à A (avec le droit pour ce dernier de joindre B) en utilisant les données contenues dans l'invitation publique de A;
- A reçoit l'invitation propre à l'utilisateur B et ajoute B à ses contacts;
- A envoie une nouvelle invitation spécifique à l'utilisateur B (avec le droit pour ce dernier de joindre A) à partir des données et droit d'accès contenus dans l'invitation reçue de B.

Un tel cas de figure suppose bien entendu qu'une invitation contienne au moins une information représentative de son émetteur, par exemple une adresse de courrier électronique, ou bien tout autre type d'identifiant de communication permettant d'entrer en contact avec ce dernier.

De plus, il est possible d'ajouter parmi les informations contenues dans une invitation, au moins un champ d'information réservé à l'ajout d'un message personnalisé d'un utilisateur émetteur à l'attention d'un utilisateur destinataire, du type "nous nous sommes rencontrés avant-hier à l'occasion de ...".

De plus, au moment de l'accès par un utilisateur à une invitation, il est possible de prévoir dans une variante possible de mise en œuvre du procédé selon l'invention, une étape d'authentification destinée à vérifier que l'utilisateur de l'invitation n'est pas une machine robot. A l'occasion d'une telle étape d'authentification, un utilisateur désireux d'accéder et/ou d'utiliser une invitation d'un autre utilisateur, pourra avoir à saisir préalablement un texte généré de façon aléatoire.

Un utilisateur souhaitant délivrer à certains de ses interlocuteurs ou contacts des droits spécifiques d'accès à ses propres données ou services partagés, pourra avantageusement le faire en générant une pluralité d'invitations à destination de tout ou partie de ses interlocuteurs ou contacts, voire même à des personnes pour lesquelles il ne possède qu'un identifiant de communication ou bien encore une donnée d'identification (adresse de courrier électronique, numéro de téléphone mobile pour l'envoi d'un SMS, code barre disponible sur une carte de visite électronique ou sur un site web, etc.), puis en envoyant ses invitations à ses différents interlocuteurs ou contacts.

La définition des droits d'accès d'au moins un deuxième utilisateur à un service partagé par un premier utilisateur est donc réalisée par le premier utilisateur et non plus comme dans les systèmes connus de l'art antérieur, par le service lui-même.

Dans un mode de réalisation avantageux de l'invention, le procédé comprend également une étape de sauvegarde par le dispositif de gestion d'invitations de ladite au moins une invitation générée relativement à au moins un deuxième utilisateur.

Une telle sauvegarde permet au premier utilisateur de revenir sur chaque invitation qu'il aura générée, dans l'objectif d'une modification ultérieure de celle-ci destinée à étendre ou restreindre les droits d'accès définis dans celle-ci pour un interlocuteur ou un contact donné, voire à la révoquer. Une invitation peut par ailleurs avoir une durée de vie limitée, par exemple deux semaines, après quoi elle n'est plus valide.

Avantageusement, l'étape de génération comprend pour chaque invitation générée :
▪ une sous-étape de validation par une entité de certification connectée audit dispositif de gestion d'invitation, d'un niveau d'accès défini dans l'invitation pour permettre au deuxième utilisateur d'accéder audit au moins un service ;
▪ une sous-étape de mémorisation par l'entité de certification d'au moins une information représentative du deuxième utilisateur associée à au moins une information représentative d'un niveau d'accès validé pour permettre au deuxième utilisateur d'accéder audit service

Une telle entité de certification pourra prendre la forme, à titre d'exemple illustratif et non limitatif, d'un serveur de privilèges apte à gérer un ensemble de droits d'accès et/ou d'utilisation de services applicatifs.

Une telle approche selon l'invention permet ainsi de garantir l'étendue des droits d'accès délivrés par un utilisateur, fournisseur d'un service, à un autre utilisateur, et de mémoriser les droits d'accès définis par ce premier utilisateur pour le deuxième utilisateur, en vue d'une demande ultérieure d'autorisation d'accès de ce dernier auprès d'une telle entité de certification.

Dans un mode de réalisation particulier de l'invention, lors de l'étape de génération précitée, on associe à l'invitation générée, un identifiant personnel propre au deuxième utilisateur.

Une telle approche permet ultérieurement de s'assurer qu'un deuxième utilisateur qui demande l'accès au service offert par un premier utilisateur est bien celui qui correspond à l'identifiant personnel contenu dans l'invitation, complémentairement auxdits droits d'accès. Cela permet d'éviter ainsi toute tentative d'usurpation d'identité et par conséquent d'attribution malhonnête du contenu d'une invitation.

Une invitation peut également inclure un identifiant (codé) permettant de répondre à une invitation par une invitation (par exemple, via le gestionnaire d'invitation qui identifie émetteur et récepteur).

Une invitation peut également inclure un message texte ou multimédia d'un premier utilisateur destiné à un deuxième utilisateur.

Dans un mode de réalisation avantageux de l'invention, l'étape de transmission précitée est exécutée par le dispositif de gestion d'invitations, en tenant compte d'au moins un identifiant de communication propre au deuxième utilisateur.

Le dispositif de gestion d'invitation pourra en effet se charger de l'envoi des invitations à chacun des interlocuteurs/contacts, préalablement spécifié par l'utilisateur souhaitant partager au moins un de ses services, par exemple, par la voie courrier électronique, transmission d'un message du type SMS, MMS, etc.

Il est également possible d'envisager que le dispositif de gestion d'invitation soit directement connecté à un annuaire de contacts, ou bien encore à un carnet d'adresses propre au premier utilisateur qui met son ou ses services à disposition, de façon à déterminer les identifiants personnels et/ou de communication desdits interlocuteurs/contacts, et à transmettre automatiquement à chaque contact contenu dans l'annuaire une invitation, dès que celle-ci aura été générée.

Dans un mode de réalisation préféré de l'invention, une telle invitation est transmise au deuxième utilisateur à l'intérieur d'une structure de données prédéterminée.

Par exemple, une invitation pourra être directement intégrée dans une carte de visite propre au premier utilisateur et jointe à un courrier électronique transmis par ce dernier à l'attention d'un deuxième utilisateur.

Une telle invitation pourra, notamment et de façon non limitative, prendre une forme "électronique" (par exemple du type message SMS, MMS, courrier électronique, URL pointant vers un site ou une page Web, vcard, etc.), ou bien encore une forme visuelle électronique ou concret (par exemple une carte papier ou une carte électronique embarquant un code barre à deux dimensions (2D)).

Tout autre type de structure de donnée standardisée pourra être utilisé comme support de transmission d'une invitation.

Dans un mode de réalisation amélioré de l'invention, l'étape de vérification comprend une sous-étape préalable d'authentification du deuxième utilisateur.

Un telle approche selon l'invention permet de s'assurer avec un plus grand niveau de contrôle qu'un deuxième utilisateur cherchant à accéder à un service d'un premier utilisateur est bien celui auquel le premier utilisateur a transmis l'invitation. C'est donc à l'entité de certification, laquelle peut prendre la forme d'un serveur de privilèges, ayant participé à la génération d'une invitation destinée à un utilisateur particulier, de valider l'accès au service. Cette validation s'effectuera alors en comparant les données représentatives de droits d'accès contenu dans ladite autorisation d'accès au service, avec les données correspondantes mémorisées à ladite étape de génération par ladite entité de certification.

Préférentiellement, le procédé selon l'invention comprend dans un mode de réalisation particulier, une étape de contrôle de la validité de l'autorisation d'accès par ledit au moins un service au près de ladite entité de certification.

À l'étape de transmission précitée, l'invitation est transmise par un premier dispositif de gestion d'invitations propre au premier utilisateur, à un deuxième dispositif de gestion d'invitations propre au deuxième utilisateur.

Ainsi, chaque utilisateur dispose de son propre dispositif de gestion, lequel pourra aussi bien gérer la réception d'invitations à des services, que la génération et la transmission de telles invitations vers d'autres utilisateurs.

Par extension, le procédé selon l'invention permet en outre à un utilisateur ayant généré une invitation, de la modifier ultérieurement, voire même de la révoquer pour un ou plusieurs utilisateurs de cette invitation.

Une telle approche technique s'avère d'autant plus intéressante qu'elle permet aux utilisateurs de gérer plus facilement la réception et l'envoi d'invitations à des services, par exemple directement en liaison avec un annuaire de contacts, ou bien encore avec leurs propres carnets d'adresses, les invitations pouvant par exemple être stockées directement à l'intérieur de ces derniers, respectivement.

Avantageusement, sur requête de modification d'une invitation préalablement transmise, une étape de transmission par le premier dispositif de gestion d'invitations au deuxième dispositif de gestion d'invitations, d'un message de mise à jour de l'invitation préalablement transmise, de façon à modifier des droits d'accès préalablement définis dans cette invitation par le premier utilisateur pour le deuxième utilisateur.

Ceci offre pour avantage supplémentaire de permettre à un premier utilisateur de modifier automatiquement et en toute transparence pour un deuxième utilisateur, des droits d'accès à un service qui ont été initialement définis par le premier utilisateur pour le deuxième utilisateur, soit pour les augmenter, soit pour les restreindre, voire même pour les révoquer complètement.

Ainsi, il suffira à un premier utilisateur de requérir auprès de son dispositif de gestion d'invitation, la mise à jour d'une invitation préalablement transmise à un dispositif de gestion d'invitations propres à un deuxième utilisateur, pour qu'un message de mise à jour soit transmis de manière automatique à ce dernier dispositif par le premier dispositif, de façon à mettre à jour les droits d'accès initialement contenus dans l'invitation considérée.

L'invention concerne également un système d'accès par au moins un deuxième utilisateur, à au moins un service offert par un premier utilisateur.

Selon l'invention, un tel système comprend :
un premier dispositif de gestion d'invitations propre au premier utilisateur, pour générer au moins une invitation permettant audit au moins un deuxième utilisateur d'accéder audit au moins un service, ladite invitation comprenant un niveau d'accès propre audit au moins un service, ledit niveau d'accès étant défini par ledit premier utilisateur pour ledit deuxième utilisateur;
un serveur de privilèges;
un deuxième dispositif de gestion d'invitations propre à un deuxième utilisateur, configuré pour recevoir une dite invitation transmise par le premier dispositif de gestion d'invitations et pour fournir ladite invitation au serveur de privilèges; le serveur de privilèges étant configuré pour vérifier le contenu de ladite invitation de sorte à délivrer audit deuxième utilisateur un jeton d'autorisation d'accès pour accéder audit au moins un service, tenant compte dudit niveau d'accès; le deuxième dispositif de gestion d'invitations étant configuré pour demander l'accès audit au moins un service à partir du jeton d'autorisation d'accès.

Préférentiellement, un tel système comprend au moins un dispositif de génération d'invitations apte à collaborer avec au moins une entité de certification de droits d'accès (par exemple un serveur de privilèges), pour générer au moins une invitation d'accès audit au moins un service destiné à au moins un deuxième utilisateur.

L'invention concerne encore un produit programme d'ordinateur téléchargeable depuis un réseau de communication et/ou stocké sur un support d'information lisible par ordinateur et/ou exécutable par un microprocesseur, un tel produit programme d'ordinateur comprenant des instructions de code pour l'exécution d'un procédé d'accès par au moins un deuxième utilisateur, à au moins un service offert par un premier utilisateur, conforme au procédé précité.

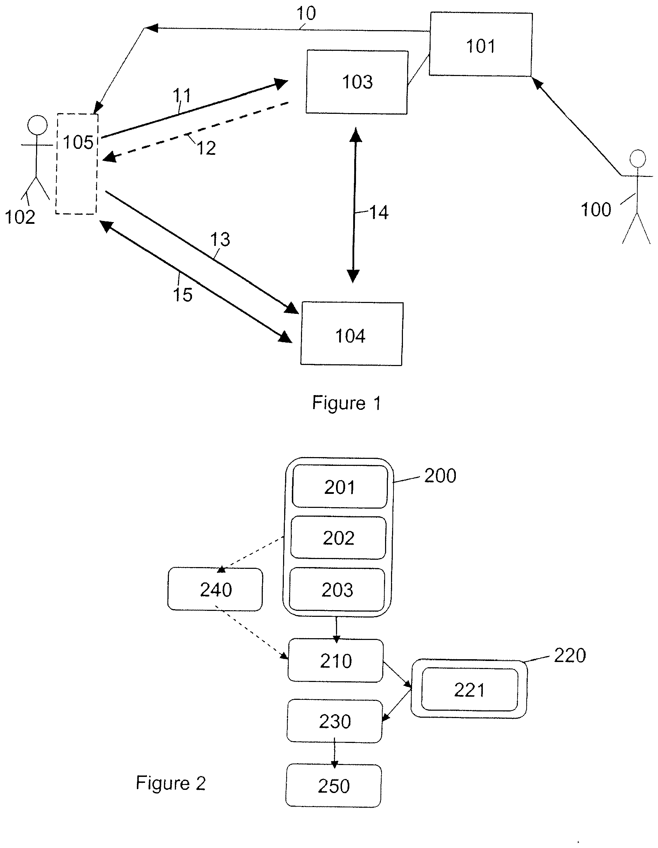

Les caractéristiques et avantages techniques de la présente invention ressortiront mieux de la description suivante, faite à titre indicatif et non limitatif, au regard des dessins annexés sur lesquels :
▪ la figure 1 présente une architecture du système selon l'invention, ainsi que la dynamique les informations échangées dans un tel système, conformément au procédé selon l'invention.
▪ La figure 2 est un organigramme résumant les grandes étapes du procédé selon l'invention.

Comme illustré sur la figure 1, le principe selon l'invention repose sur la séquence suivante :
- tout d'abord, l'utilisateur 100 produit, à partir d'un dispositif 101 de gestion d'invitations, un coupon d'invitation. Le coupon d'invitation donne accès à des données ou service(s) de l'utilisateur 100 ;
- l'utilisateur 100 transmet (10) ensuite ce coupon à au moins un de ses interlocuteurs 102. Cette transmission (10) peut être faite par exemple par un envoi de courrier électronique (email) ou sous la forme d'un message multimédia de type messagerie instantanée, ou bien encore ou sous la forme d'un message SMS (pour "Short Message Service" ou "service de message court" en français). La transmission 10 des coupons d'invitation peut être assurée de façon dynamique et/ou automatique par le dispositif 101 de gestion d'invitations. Une telle invitation inclura préférentiellement un identifiant propre à chaque interlocuteur destinataire, par exemple un numéro de téléphone mobile ou de compte "OpenID", ou bien encore de compte dans un carnet d'adresse, afin que seul le destinataire possédant cet identifiant puisse utiliser l'invitation.

La transmission des coupons d'invitation pourra se faire également, dans une variante de mise en œuvre avantageuse de l'invention, entre un premier dispositif 101 de gestion d'invitations propre au premier utilisateur 100 et un deuxième dispositif 105 de gestion d'invitations propre au deuxième utilisateur 102. Une telle variante permet de rendre plus simple les transactions d'invitations entre utilisateur. Elle permet en outre de faciliter les mises à jour des droits d'accès contenus dans des invitations préalablement transmises, par simples envois de messages de mise à jour de droits d'accès entre les dispositifs 101 et 105 de gestion d'invitations.
- par la suite, les interlocuteurs 102 sont alors en mesure de solliciter (11) un accès aux données ou services de l'utilisateur 100 en produisant le coupon d'invitation qu'ils ont préalablement reçu. Ceci peut s'effectuer, de façon optionnelle, après une étape d'authentification auprès du garant de l'identifiant inclus dans l'invitation, par exemple auprès d'un serveur 103 de privilèges connecté au dispositif 101 de gestion d'invitations, le serveur 103 ayant pu contribuer à la génération des coupons d'invitation ;
- le serveur 103 de privilèges décide d'une politique de contrôle d'accès en fonction du coupon d'invitation, et retourne (12) un coupon d'autorisation d'accès avec lequel l'interlocuteur peut accéder (13) au service 104 ;
- le service 104 accédé par l'interlocuteur 102, récupère (14) alors auprès du serveur 103 de privilèges, à partir du coupon d'autorisation transmis par l'interlocuteur 102, les droits d'accès au service 104 autorisés pour l'interlocuteur 102;
   D'une façon plus générale, le serveur de privilège (entité de certification) et le(s) service(s) 104 interagissent (14) pour déterminer les droits d'accès du deuxième utilisateur. Cette interaction peut se faire soit au moment de l'accès (du service 104 vers le serveur 103 de privilèges), ou bien au préalable par une configuration du service 104 par le serveur 103 de privilèges, voire même indirectement par un secret partagé (cas du cryptage);
- l'interlocuteur 102 utilise (15) le service 104 mis à sa disposition par l'intermédiaire d'une invitation transmis par l'utilisateur 100, selon les droits d'accès qui lui ont été préalablement affectés par ledit utilisateur 100 dans ladite invitation.

Pour assurer la dynamique des échanges dans le cadre du procédé d'accès selon l'invention, un système réparti d'accès par au moins un deuxième utilisateur, à au moins un service offert par un premier utilisateur, est mis en œuvre. Il repose sur une mise en œuvre des différentes entités suivantes :
- un dispositif 101 de gestion de coupons d'invitation : un tel dispositif serveur consiste en une interface graphique (IHM) apte à collaborer avec un module de génération de coupons d'invitations, adaptés pour permettre à un utilisateur 100 de générer, modifier, révoquer des invitations, ainsi que les droits d'accès contenus dans ces dernières, droits d'accès définis par l'utilisateur 100 pour rendre accessible au moins un de ses services 104 à au moins un interlocuteur 102. Un tel dispositif 101 de gestion des coupons d'invitation pourra être avantageusement lié à un carnet d'adresse de l'utilisateur 100, de façon à automatiser, ou tout au moins faciliter, la diffusion des coupons d'invitations aux différents interlocuteurs 102 référencés dans un tel carnet d'adresses, et à faciliter le stockage des invitations reçues par les interlocuteurs 102.

Dans une variante possible de l'invention, il est envisageable, sans difficulté supplémentaire en termes d'implémentation, que les invitations puissent être directement stockées dans un carnet d'adresses d'un utilisateur.

Un tel dispositif 101 de gestion des coupons d'invitation, pourra, dans un mode de réalisation amélioré de l'invention, assurer dynamiquement la transmission 10 des différents coupons d'invitations destinés à des interlocuteurs 102 visés par l'utilisateur 100. Les différentes informations que le dispositif 101 de gestion des coupons produit lors de l'étape de génération des coupons d'invitation (à savoir, les coupons d'invitation eux-mêmes, les groupes d'interlocuteurs et les droits associés) sont stockées dans un serveur 103 de privilèges auquel le dispositif 101 est connecté. Selon le mode de réalisation envisagé du système d'accès selon l'invention, le serveur 103 de privilèges pourra être soit intégré au dispositif 101 de gestion des coupons d'invitations, soit distinct et distant de ce dernier, tout en lui étant connecté, par exemple par l'intermédiaire d'un réseau de communication.
- Un serveur 103 de privilèges, apte à collaborer avec le dispositif 101 de gestion des coupons d'invitation. Un tel serveur 103 génère des identifiants uniques de privilèges associés à des politiques de gestion de droits d'accès respectivement définis par l'utilisateur 100 pour chacun des interlocuteurs 102 auquel il souhaite transmettre un coupon d'invitation d'accès à l'un au moins de ses services 104.

Le serveur 103 de privilèges constitue un composant important du système selon l'invention. Il stocke le lien entre un coupon d'invitation et les droits associés vis-à-vis des services 104, définis par l'utilisateur 100 pour un interlocuteur 102 donné. Il stocke également, dans un mode de réalisation amélioré de l'invention, un lien entre un coupon d'invitation et un ou plusieurs identifiants d'un interlocuteur 102 destinataires de ce coupon. Il peut mettre à jour les identifiants précités, par exemple lors de la mise à jour de la fiche contact du destinataire, dans le carnet d'adresse de l'émetteur 100 du coupon, ou à la demande d'un serveur de privilèges d'un autre fournisseur de service. Lorsqu'une requête lui est faite à partir d'un coupon d'invitation, le serveur 103 de privilèges répond, en fonction des droits associés à ce coupon, en renvoyant (12) à l'interlocuteur 102 un ou plusieurs jetons d'autorisation d'accès pour accéder aux services autorisés.

Dans une variante possible de l'invention, le système selon l'invention met en œuvre un dispositif 105 de gestion d'invitations propres au deuxième utilisateur 102 : un tel dispositif serveur consiste également en une interface graphique (IHM) adaptée pour permettre au deuxième utilisateur de gérer les différentes invitations qu'il peut recevoir de différents utilisateurs, le cas échéant, en relation avec son carnet d'adresse.

Au final, un service 104 est accédé par un interlocuteur 102, en fonction de droits d'accès spécifiquement définis pour cet interlocuteur 102 par un utilisateur-fournisseur 100 du service 104, lesquels droits d'accès sont validés et certifiés par le serveur 103 de privilèges. L'interlocuteur 102 accède alors au service 104 en transmettant (13) au service 104, dans sa requête d'accès à ce dernier, un jeton qui permet ainsi au service 104 de connaître à partir de ce jeton la politique de contrôle d'accès à appliquer. Pour ce faire, le service 104 interroge (14) lui-même le serveur 103 de privilèges afin d'obtenir en retour de celui-ci la validation des droits d'accès sollicités par l'interlocuteur 102 pour accéder au service 104.

Le procédé d'accès par au moins un deuxième utilisateur, à au moins un service offert par un premier utilisateur, met en œuvre la séquence suivante :
- L'utilisateur 100 utilise l'IHM (Interface Homme-Machine) du dispositif 101 de gestion d'invitations, pour générer des coupons d'invitations ou en modifier/supprimer des invitations existantes. Il aura auparavant renseigné les services 104 auquel il souhaite donner accès à l'un au moins de ses interlocuteurs ou contacts 102, et éventuellement créé des groupes de droit (famille, professionnel...) à affecter aux invitations. A cette fin, le dispositif 101 de gestion d'invitations peut être lié au carnet d'adresses de l'utilisateur 100 afin de pouvoir attribuer des droits à des catégories déjà créées dans son carnet d'adresses ou à des contacts spécifiques.

A titre d'exemple, un utilisateur (100) peut créer les groupes suivants :
∘ Un groupe "Famille" qui peut voir les données personnelles de l'utilisateur (100) considéré (telles que nom, prénom, adresse postale, photo), sa présence, le contacter sur son téléphone fixe ou portable et lui envoyer des emails sur son adresse privée ou professionnelle
∘ Un groupe "Club de foot" qui peut voir la présence de l'utilisateur considéré après 19h et le week-end et le contacter sur son téléphone fixe et lui envoyer des emails sur son adresse privée
∘ Un groupe "Travail" qui peut voir la présence de l'utilisateur considéré de 9h à 19h du lundi au vendredi, le contacter sur son mobile de 9h à 19h du lundi au vendredi et lui envoyer des emails sur son adresse professionnelle
∘ Un groupe "Anonyme" (groupe par défaut) qui peut envoyer des emails à l'utilisateur considéré sur une troisième adresse email qu'il ne consulte qu'occasionnellement.

Le serveur 103 de privilèges conserve en mémoire un historique des invitations générées, ce qui permet à l'utilisateur 100 de revenir ultérieurement sur des droits, soit pour étendre/restreindre les droits d'accès d'un interlocuteur 102 à l'un de ses services 104, soit pour révoquer des droits précédemment attribués.

L'utilisateur 100 peut éventuellement associer à un coupon d'invitation un identifiant personnel caractérisant le destinataire 102, afin de garantir que seule la personne possédant cet identifiant personnel pourra accéder aux services 104 autorisés dans le coupon d'invitation. Cet identifiant personnel peut éventuellement être utilisé comme identifiant de communication pour l'envoi du coupon d'invitation (par exemple pour un envoi par SMS lorsque l'identifiant est un numéro de téléphone).
- Le dispositif 101 de gestion d'invitations envoie (10) les coupons d'invitation aux interlocuteurs 102 définis par l'utilisateur. Cet envoi peut se faire soit de façon systématique, soit à la demande (par exemple lorsqu'un interlocuteur le demande au système). Un coupon d'invitation publique peut éventuellement être mis à disposition (par exemple sur une page web perso ou un blog).

Le dispositif 101 génère les coupons d'invitation avec l'aide du serveur 103 de privilèges. Le dispositif 101 n'est responsable que de la saisie et de la mise au bon format des données générées.

Le coupon d'invitation peut être de plusieurs types, comme par exemple une carte de visite, c'est-à-dire une structure de données standardisée (par exemple, au format "vcard" ou "hcard") ou propriétaire permettant de stocker et de communiquer les identifiants de joignabilité d'une personne ou d'une entité organisationnelle (par exemple adresse email, un numéro de téléphone, de fax, un identifiant de messagerie instantanée, un identifiant de jeu en réseau, une adresse d'un site web personnel, etc.). Les jetons définis ci-dessous peuvent alors être directement véhiculés dans cette carte de visite. Le coupon peut également prendre la forme d'un champ spécifique d'une carte de visite.

Les coupons d'invitation (et les jetons associés) reçus peuvent être conservés dans un carnet d'adresse (notamment s'ils ont la forme d'une carte de visite) ou par un autre moyen de stockage d'information.
- Un interlocuteur 102 ayant reçu un coupon d'invitation de l'utilisateur 100 peut accéder à un service 104 proposé par l'utilisateur, par exemple joindre l'utilisateur 100 au téléphone ou lui envoyer des messages instantanés, ou accéder à des données personnelles de l'utilisateur 100 (par exemple une adresse postale).

Pour accéder à des données personnelles de l'utilisateur, l'interlocuteur 102 peut, dans un mode de réalisation particulier, fournir (11) au serveur 103 de privilèges le coupon d'invitation reçu et récupérer (12) les données publiées par l'utilisateur 100 pour ce coupon.

D'une façon générale, pour accéder à un service 104 (par exemple pour entrer en relation avec l'utilisateur), l'interlocuteur 102 demande (11) au serveur 103 de privilèges un accès au service. Il fournit lors de cette demande le coupon d'invitation reçu. Le serveur 103 de privilèges retourne (12) un jeton lié à une politique de contrôle d'accès.

Ce jeton peut parvenir sous diverses formes, comme par exemple :
▪ un "token" qui permettra au service de communication de récupérer l'identifiant de joignabilité correspondant (par exemple une adresse email ou une URI SIP) auprès du serveur 103 de privilèges (cas décrit en annexe A) ;
▪ un identifiant de joignabilité crypté par le serveur 103 de privilèges avec une clé de cryptage connue à la fois du serveur 103 de privilèges et du service 104 de l'utilisateur 100, ou bien directement avec une clé publique du service 104 ;
▪ un identifiant de joignabilité temporaire ("one shot") ayant été au préalable provisionné dans le service 104 par le serveur 103 de privilèges ;
▪ une URI vers une page web (hébergée par exemple par le serveur de privilèges) permettant d'exécuter le service 104 sans que les identifiants ne soient accessibles (par exemple du "click to dial" pour la téléphonie).

Une authentification de l'interlocuteur 102 peut éventuellement être demandée, si le coupon a été défini à cet effet par l'utilisateur 100.
- L'interlocuteur 102 demande (13) à accéder au service de communication. Il fournit le jeton de politique de contrôle d'accès, certifié par le serveur 103 de privilèges comme spécifié par l'utilisateur 100. Cela peut se faire par divers moyens, selon la forme du jeton tel qu'exposé ci-dessus. Par exemple :
   ▪ dans le cas d'un "token", au moyen d'un identifiant de joignabilité crypté ou à usage unique, ("one-shot"), le terminal de l'interlocuteur 102 invoque directement le service 104 partagé par l'utilisateur 100 ;
   ▪ dans le cas d'un appel de type "click to dial", c'est le serveur web désigné par l'URI transmise qui invoque le service 104, par exemple un service de communication. Dans un mode de réalisation particulier, ce serveur web peut être confondu avec le serveur 103 de privilèges.
- Le service 104 de communication demande (14) au serveur 103 de privilèges la définition de la politique de contrôle d'accès liée au jeton qui lui a été fournit. Cette étape est optionnelle selon la forme du jeton. Elle sera par exemple omise dans le cas de l'identifiant de joignabilité à usage unique (de type "one-shot"), où les droits auront été provisionnés au préalable dans le service 104 par le serveur 103 de privilèges.
- Le service 104 réalise le service pour l'interlocuteur 102 (par exemple en le mettant en relation avec l'utilisateur sur son téléphone portable personnel, sans que le numéro de téléphone du portable ait été communiqué, ou bien en lui offrant un accès personnalisé au service 104, dépendant des droits d'accès préalablement définis pour celui-ci par l'utilisateur 100).

Une description détaillée d'un mode de réalisation possible de l'invention est proposé ci-dessous, sur la base d'un service de téléphonie accessible depuis une page Web.

La séquence qui suit décrit un exemple de réalisation du procédé appliqué à un service de téléphonie avec un coupon d'invitation délivré par une interface web. Le scénario est mis en œuvre avec un utilisateur UA qui cherche à filtrer ses appels téléphonique entrants, et un interlocuteur UB qui cherchera à entrer en communication avec l'utilisateur UA.
1) L'utilisateur UA transmet à UB via une messagerie, une URL destinée à permettre à UB d'entrer en communication de façon privilégiée avec lui. Cette URL est au format des URL HTTP et constitue le coupon d'invitation. Elle comporte une donnée chiffrée qui constitue l'identifiant de privilège. Cette donnée chiffrée est générée par le serveur de privilège. L'URL pointe en réalité sur le serveur de privilèges de l'utilisateur UA et non sur le service de téléphonie.
   Ce coupon d'invitation a la forme suivante : *http:*//*ua.invitation-orange.com*/*87GHT54PO0007FTY32;*
2) UB souhaite entrer en communication avec UA. Il utilise l'URL précitée. L'appel de UB est reçu par le serveur de privilèges de l'utilisateur UA ;
3) Le serveur de privilèges de UA vérifie que l'identifiant de privilège n'est pas périmé et obtient un document XHTML (une page web) au format "hCard" qui contient des données sur l'utilisateur (UA), des URL d'accès à des données ou services de l'utilisateur et des identifiants de joignabilité ;
4) Le serveur de privilèges de l'utilisateur UA fournit, dans le document "xhtml", une "URI SIP" pointant vers l'agent du réseau qui est en charge de traiter cette demande de mise en relation pour UA (par exemple vers un téléphone SIP de l'utilisateur UA). L'URI est opaque et consiste en un jeton identifiant la politique d'accès « *accès direct* » et l'utilisateur UA. L'URI de l'exemple est : *"sip:58346981247@sip.or-ange.com";*
5) UB utilise cette URI SIP pour appeler UA ;
6) L'agent du réseau qui reçoit la demande, invoque le serveur de privilèges pour connaître quelle est la politique d'accès et le destinataire de l'URI qu'il a reçue *("58346981247") ;*
7) Le serveur de privilèges fournit les informations nécessaires à la gestion de cet appel: *sonnerie autorisée et renvoi vers mobile autorisé,* et l'URI SIP de destination (*"sdupond1@sip.orange.com"*) ;
8) L'agent du réseau en charge de traiter l'appel réalise le service en fonction des droits.

Un exemple de codage correspondant est donné en annexe A.

Concernant le format du coupon d'invitation, celui-ci peut, par exemple, être du type :
- "Privilege://provider/token_émetteur/token_coupon", ou bien ;
- "http://privilege.provider/emetteur/token".

Le "token" ou jeton peut être omis lorsque le destinataire doit être authentifié auprès du serveur de privilèges.

On décrit ci-dessous quelques exemples de forme de jeton d'autorisation d'accès à un service partagé par un utilisateur, pour au moins un interlocuteur.

On considère ici, à titre d'exemple illustratif et non limitatif, qu'un interlocuteur Bob a reçu un coupon d'invitation d'une utilisatrice Alice désireuse d'offrir à Bob un accès spécifique à l'un de ses propres services, par exemple dans un contexte de service web communautaire.

Bob dispose d'un accès web PC client léger ou d'un client sur un téléphone mobile.

Dans le cas de l'accès mobile, les jetons sont par exemple les suivants :
- Pour le service téléphonie : " Call <sip:abcd@orange.fr> "
   L'actionnement de ce jeton lance un appel du téléphone mobile vers abcd@orange.fr. Cette URI ("Uniform Ressource Identifier" ou "identifiant uniforme de ressource") est configurée au préalable par le serveur de privilèges auprès du serveur de téléphonie comme devant être routée vers le numéro de téléphone réel d'Alice, avec éventuellement des règles particulières d'horaire (par exemple uniquement de 14h à 18h, sinon messagerie).
- Pour le service de présence : " Presence <pres:xyz@orange.fr> "
   L'actionnement de ce jeton lance une requête du client de présence vers xyz@orange.fr. Cette adresse est configurée au préalable par le serveur de privilèges auprès du serveur de présence comme correspondant à la présence d'Alice, avec des règles particulières de respect de la vie privée ("privacy" en anglais).
- Pour le service de photo : " Album photo <http:gugus.photo.orange.fr> " L'actionnement de ce jeton lance une requête du client web mobile vers http:gugus.photo.orange.fr.

Dans le cas d'un accès web, les jetons sont par exemple les suivants :
- Pour le service téléphonie : " Call http://abcd.phone.orange.fr " L'actionnement de ce jeton lance un appel en *click to dial* vers abcd@orange.fr, Bob doit alors entrer le numéro du téléphone le plus proche de lui. L'URI abcd@orange.fr est configurée au préalable comme précédemment.
- Pour le service de présence : " Presence http://xyz.presence.orange.fr" L'actionnement de ce jeton lance une requête du client de présence (front-end web) vers xyz@orange.fr. Cette adresse est configurée au préalable par le serveur de privilège comme précédemment.
- Pour le service de photo : " Album photo <http:gugus.photo.orange.fr> " L'actionnement de ce jeton lance une requête du client web vers http:gugus.photo.orange,fr.

On résume ci-dessous en relation avec la figure 2, les grandes étapes du procédé d'accès par au moins un deuxième utilisateur 102, à au moins un service offert par un premier utilisateur 100, selon l'invention :
▪ une étape 210 de transmission par le premier utilisateur 100 au deuxième utilisateur 102, d'au moins une invitation pour accéder à au moins un service, cette invitation comprenant un niveau d'accès propre audit au moins un service, le niveau d'accès étant défini par le premier utilisateur pour le deuxième utilisateur ;
▪ une étape 220 de vérification du contenu de ladite au moins une invitation par une entité de gestion de droit d'accès, l'étape 220 de vérification délivrant au deuxième utilisateur 102 une autorisation d'accès audit au moins un service 104 tenant compte du niveau d'accès ;
▪ une étape 230 de demande d'accès audit au moins un service par le deuxième utilisateur, à partir de l'autorisation d'accès.

Préalablement à l'étape 210 de transmission, le procédé selon l'invention comprend une étape 200 de génération par un dispositif 101 de gestion d'invitations d'au moins une invitation d'accès audit au moins un service destiné à au moins un deuxième utilisateur.

Il comprend également une étape 240 de sauvegarde par le dispositif 101 de gestion d'invitations d'au moins une invitation générée relativement à au moins un deuxième utilisateur 102.

L'étape 200 de génération comprend pour chaque invitation générée :
▪ une sous-étape 201 de validation par un serveur 103 de privilèges d'accès connecté au dispositif 101 de gestion d'invitation, d'un niveau d'accès propre au deuxième utilisateur 102 pour accéder audit au moins un service 104 et défini dans l'invitation ;
▪ une sous-étape 202 de mémorisation par le serveur 103 de privilèges d'accès d'au moins une information représentative dudit au moins un deuxième utilisateur 102 associée à au moins une information représentative d'un niveau d'accès certifié audit au moins un service 104 pour le deuxième utilisateur 102.

A ladite étape 200 de génération, on associe 203 à ladite invitation générée un identifiant dudit deuxième utilisateur 102.

L'étape 210 de transmission est exécutée par le dispositif 101 de gestion d'invitations, à partir d'au moins un identifiant de communication propre au deuxième utilisateur 102.

Ladite au moins une invitation est transmise (étape 210) au deuxième utilisateur 102 à l'intérieur d'une structure de données standardisée.

Ladite au moins une invitation est stockée dans un dispositif 105 de gestion des invitations reçues.

L'étape 220 de vérification comprend une sous-étape 221 préalable d'authentification dudit deuxième utilisateur 102.

Le procédé selon l'invention comprend également une étape 250 de contrôle de la validité de l'autorisation d'accès par ledit au moins un service 104, auprès du serveur 103 de privilèges.

### Annexe A

```
 <div class="vcard">
 <span class="fn n">
 <a class="url" href="http://dupond.orange.com">
  <span class="given-name">Serge</span>
  <span class="family-name">Dupond</span>
 </a>
 </span>
 <span class="nickname">S.Dupond</span>
 <a class="url" href="xmpp:58346981247@jabberorange.com">priviledge IM access
 to S Dupond</a>
 <a class="url" href="msnim:chat?contact=sdupond@hotmail.com">IM with s
 dupond@hotmail.com</a>
 <a class="url" href="sip:58346981247@sip.orange.com">Priviledge calling line </a>
 <a class="email" href="mailto:58346981247@orange.com">
 <span class="type">preferred email</span>
 </a>
 <span class="org">Orange</span>
 <span class="geo">
 <abbr class="latitude" title="48.816667">N 48° 81.6667</abbr>
 <abbr class="longitude" title="2.366667">E 2° 36.6667</abbr>
 </span>
 </div>
```

## Revendications

1. Procédé d'accès par au moins un deuxième utilisateur (102), à au moins un service (104) offert par un premier utilisateur (100), **caractérisé en ce que** ledit procédé comprend :
▪ une étape de génération, par un premier dispositif (101) de gestion d'invitations propre au premier utilisateur, d'au moins une invitation comprenant un niveau d'accès défini par ledit premier utilisateur pour permettre audit au moins un deuxième utilisateur d'accéder audit au moins un service ;
▪ une étape de transmission, par ledit premier dispositif (101) de gestion d'invitations, d'une dite invitation à un deuxième dispositif (105) de gestion d'invitations propre à un deuxième utilisateur ;
▪ une étape de fourniture, par le deuxième dispositif (105) de gestion d'invitations, de ladite invitation à un serveur (103) de privilèges ;
▪ une étape de vérification, par le un serveur de privilèges, du contenu de ladite au moins une invitation, délivrant audit deuxième dispositif (105) de gestion d'invitations au moins un jeton d'autorisation d'accès pour accéder audit au moins un service, fonction dudit niveau d'accès ;
▪ une étape de demande d'accès audit au moins un service par ledit deuxième dispositif (105) de gestion d'invitations, à partir dudit jeton d'autorisation d'accès.

2. Procédé selon la revendication 1, **caractérisé en ce qu'**il comprend une étape de sauvegarde par ledit dispositif de gestion d'invitations de ladite au moins une invitation générée relativement à au moins un deuxième utilisateur.

3. Procédé selon l'une quelconque des revendications 1 et 2, **caractérisé en ce que** ladite étape de génération comprend pour chaque invitation générée à ladite étape de génération :
▪ une sous-étape de validation par le serveur (103) de privilèges connecté audit premier dispositif (101) de gestion d'invitation, d'un niveau d'accès défini dans ladite invitation pour permettre audit deuxième utilisateur d'accéder audit au moins un service ;
▪ une sous-étape de mémorisation par ledit serveur (103) de privilèges d'au moins une information représentative dudit au moins un deuxième utilisateur associée à au moins une information représentative d'un niveau d'accès validé pour permettre audit deuxième utilisateur d'accéder audit service.

4. Procédé selon l'une quelconque des revendications 1 à 3, **caractérisé en ce qu'**à ladite étape de génération, on associe à ladite invitation générée un identifiant personnel propre audit deuxième utilisateur.

5. Procédé selon l'une quelconque des revendications 1 à 4, **caractérisé en ce que** ladite étape de transmission est exécutée par ledit premier dispositif de gestion d'invitations, en tenant compte d'au moins un identifiant de communication propre audit deuxième utilisateur.

6. Procédé selon l'une quelconque des revendications 1 à 5, **caractérisé en ce que** ladite au moins une invitation est transmise audit deuxième dispositif (105) de gestion d'invitations à l'intérieur d'une structure de données prédéterminée.

7. Procédé selon l'une quelconque des revendications 1 à 6, **caractérisé en ce que** ladite étape de vérification comprend une sous-étape préalable d'authentification dudit deuxième utilisateur.

8. Procédé selon l'une quelconque des revendications 3 à 7, **caractérisé en ce qu'**il comprend une étape de contrôle de la validité de ladite autorisation d'accès par ledit au moins un service à l'aide du serveur de privilèges,

9. Procédé selon la revendication 8, **caractérisé en ce qu'**il comprend, sur requête de modification d'une invitation préalablement transmise, une étape de transmission par ledit premier dispositif de gestion d'invitations audit deuxième dispositif de gestion d'invitations, d'un message de mise à jour de ladite invitation préalablement transmise, de façon à modifier des droits d'accès préalablement définis dans cette invitation par ledit premier utilisateur pour ledit deuxième utilisateur.

10. Système d'accès par au moins un deuxième utilisateur, à au moins un service offert par un premier utilisateur, **caractérisé en ce qu'**il comprend :
▪ un premier dispositif (101) de gestion d'invitations propre au premier utilisateur, pour générer au moins une invitation permettant audit au moins un deuxième utilisateur d'accéder audit au moins un service, ladite invitation comprenant un niveau d'accès propre audit au moins un service, ledit niveau d'accès étant défini par ledit premier utilisateur pour ledit deuxième utilisateur ;
▪ un serveur (103) de privilèges ;
▪ un deuxième dispositif (105) de gestion d'invitations propre à un deuxième utilisateur, configuré pour recevoir une dite invitation transmise par le premier dispositif (101) de gestion d'invitations et pour fournir ladite invitation au serveur (103) de privilèges ;
le serveur de privilèges étant configuré pour vérifier le contenu de ladite invitation de sorte à délivrer audit deuxième utilisateur un jeton d'autorisation d'accès pour accéder audit au moins un service, tenant compte dudit niveau d'accès ;
le deuxième dispositif (105) de gestion d'invitations étant configuré pour demander l'accès audit au moins un service à partir du jeton d'autorisation d'accès.

11. Système selon la revendication 10, **caractérisé en ce que** le premier dispositif de génération d'invitations est apte à collaborer avec le serveur (103) de privilèges pour générer ladite au moins une invitation d'accès audit au moins un service destiné à au moins un deuxième utilisateur.

12. Produit programme d'ordinateur téléchargeable depuis un réseau de communication et/ou stocké sur un support d'information lisible par ordinateur et/ou exécutable par un microprocesseur, **caractérisé en ce qu'**il comprend des instructions de code pour l'exécution d'un procédé d'accès par au moins un deuxième utilisateur, à au moins un service offert par un premier utilisateur, conforme à l'une quelconque des revendications 1 à 9.

## Patentansprüche

1. Verfahren zum Zugriff, durch mindestens einen zweiten Benutzer (102), auf mindestens einen Dienst (104), der von einem ersten Benutzer (100) angeboten wird, **dadurch gekennzeichnet, dass** das Verfahren umfasst:
▪ einen Schritt der Erzeugung, durch eine erste Vorrichtung (101) zur Verwaltung von Einladungen, die dem ersten Benutzer eigen ist, mindestens einer Einladung, die ein von dem ersten Benutzer definiertes Zugriffsniveau umfasst, um dem mindestens einen zweiten Benutzer zu ermöglichen, auf den mindestens einen Dienst zuzugreifen;
▪ einen Schritt der Übertragung, durch die erste Vorrichtung (101) zur Verwaltung von Einladungen, einer solchen Einladung an eine zweite Vorrichtung (105) zur Verwaltung von Einladungen, die einem zweiten Benutzer eigen ist;
▪ einen Schritt der Lieferung, durch die zweite Vorrichtung (105) zur Verwaltung von Einladungen, der Einladung an einen Rechteserver (103);
▪ einen Schritt der Überprüfung, durch den einen Rechteserver, des Inhalts der mindestens einen Einladung, welcher der zweiten Vorrichtung (105) zur Verwaltung von Einladungen mindestens ein Zugriffsberechtigungstoken zum Zugreifen auf den mindestens einen Dienst in Abhängigkeit von dem Zugriffsniveau liefert;
▪ einen Schritt der Anforderung von Zugriff auf den mindestens einen Dienst durch die zweite Vorrichtung (105) zur Verwaltung von Einladungen auf der Basis des Zugriffsberechtigungstokens.

2. Verfahren nach Anspruch 1, **dadurch gekennzeichnet, dass** es einen Schritt der Sicherung, durch die Vorrichtung zur Verwaltung von Einladungen, der mindestens einen Einladung umfasst, die in Bezug auf den mindestens einen zweiten Benutzer erzeugt wurde.

3. Verfahren nach einem der Ansprüche 1 und 2, **dadurch gekennzeichnet, dass** der Schritt der Erzeugung für jede Einladung, die im Schritt der Erzeugung erzeugt wurde, umfasst:
▪ einen Teilschritt der Validierung, durch den mit der ersten Vorrichtung (101) zur Verwaltung von Einladungen verbundenen Rechteserver (103), eines in der Einladung definierten Zugriffsniveaus, um dem zweiten Benutzer zu ermöglichen, auf den mindestens einen Dienst zuzugreifen;
▪ einen Teilschritt der Speicherung, durch den Rechteserver (103), mindestens einer für den mindestens einen zweiten Benutzer repräsentativen Information, die mit mindestens einer Information verbunden ist, die für ein validiertes Zugriffsniveau repräsentativ ist, um dem zweiten Benutzer zu ermöglichen, auf den Dienst zuzugreifen.

4. Verfahren nach einem der Ansprüche 1 bis 3, **dadurch gekennzeichnet, dass** im Schritt der Erzeugung der erzeugten Einladung eine persönliche Kennung zugeordnet wird, die dem zweiten Benutzer eigen ist.

5. Verfahren nach einem der Ansprüche 1 bis 4, **dadurch gekennzeichnet, dass** der Schritt der Übertragung von der ersten Vorrichtung zur Verwaltung von Einladungen unter Berücksichtigung mindestens einer Kommunikationskennung, die dem zweiten Benutzer eigen ist, ausgeführt wird.

6. Verfahren nach einem der Ansprüche 1 bis 5, **dadurch gekennzeichnet, dass** die mindestens eine Einladung an die zweite Vorrichtung (105) zur Verwaltung von Einladungen innerhalb einer vorbestimmten Datenstruktur übertragen wird.

7. Verfahren nach einem der Ansprüche 1 bis 6, **dadurch gekennzeichnet, dass** der Schritt der Überprüfung einen vorausgehenden Teilschritt der Authentifizierung des zweiten Benutzers umfasst.

8. Verfahren nach einem der Ansprüche 3 bis 7, **dadurch gekennzeichnet, dass** es einen Schritt der Kontrolle der Gültigkeit der Zugriffsberechtigung durch den mindestens einen Dienst mithilfe des Rechteservers umfasst.

9. Verfahren nach Anspruch 8, **dadurch gekennzeichnet, dass** es, auf eine Anforderung zur Änderung einer zuvor übertragenen Einladung hin, einen Schritt der Übertragung, durch die erste Vorrichtung zur Verwaltung von Einladungen an die zweite Vorrichtung zur Verwaltung von Einladungen, einer Nachricht zur Aktualisierung der zuvor übertragenen Einladung umfasst, um Zugriffsrechte zu ändern, die zuvor in dieser Einladung durch den ersten Benutzer für den zweiten Benutzer definiert wurden.

10. System zum Zugriff, durch mindestens einen zweiten Benutzer, auf mindestens einen Dienst, der von einem ersten Benutzer angeboten wird, **dadurch gekennzeichnet, dass** es umfasst:
▪ eine erste Vorrichtung (101) zur Verwaltung von Einladungen, die dem ersten Benutzer eigen ist, zum Erzeugen mindestens einer Einladung, die dem mindestens einen zweiten Benutzer ermöglicht, auf den mindestens einen Dienst zuzugreifen, wobei die Einladung ein Zugriffsniveau umfasst, das dem mindestens einen Dienst eigen ist, wobei das Zugriffsniveau von dem ersten Benutzer für den zweiten Benutzer definiert ist;
▪ einen Rechteserver (103);
▪ eine zweite Vorrichtung (105) zur Verwaltung von Einladungen, die dem zweiten Benutzer eigen ist und dafür ausgelegt ist, eine solche Einladung zu empfangen, die durch die erste Vorrichtung (101) zur Verwaltung von Einladungen übertragen wird, und die Einladung an den Rechteserver (103) zu liefern;
wobei der Rechteserver dafür ausgelegt ist, den Inhalt der Einladung zu überprüfen, um dem zweiten Benutzer ein Zugriffsberechtigungstoken zum Zugreifen auf den mindestens einen Dienst unter Berücksichtigung der Zugriffsniveaus zu liefern;
wobei die zweite Vorrichtung (105) zur Verwaltung von Einladungen dafür ausgelegt ist, den Zugriff auf den mindestens einen Dienst auf der Basis des Zugriffsberechtigungstokens anzufordern.

11. System nach Anspruch 10, **dadurch gekennzeichnet, dass** die erste Vorrichtung zur Erzeugung von Einladungen geeignet ist, mit dem Rechteserver (103) zusammenzuwirken, um die mindestens eine Einladung zum Zugriff auf den mindestens einen Dienst zu erzeugen, die für mindestens einen zweiten Benutzer bestimmt ist.

12. Computerprogrammprodukt, welches von einem Kommunikationsnetz herunterladbar und/oder auf einem computerlesbaren Datenträger gespeichert und/oder von einem Mikroprozessor ausführbar ist, **dadurch gekennzeichnet, dass** es Codeanweisungen zur Ausführung eines Verfahrens zum Zugriff, durch mindestens einen zweiten Benutzer, auf mindestens einen Dienst, der von einem ersten Benutzer angeboten wird, gemäß einem der Ansprüche 1 bis 9 umfasst.

## Claims

1. Method for at least a second user (102) to access at least one service (104) provided by a first user (100), **characterized in that** said method comprises:
• a step of generating, by means of a first device (101) for managing invitations belonging to the first user, at least one invitation comprising a level of access defined by said first user in order to allow said at least a second user to access said at least one service;
• a step of transmitting, by means of said first device (101) for managing invitations, one said invitation to a second device (105) for managing invitations belonging to a second user;
• a step of delivering, by means of the second device (105) for managing invitations, said invitation to a privilege server (103);
• a step of verifying, by means of the one privilege server, the content of said at least one invitation, and delivering, to said second device (105) for managing invitations, at least one access authorization token for accessing said at least one service, according to said level of access;
• a step of requesting access to said at least one service by means of said second device (105) for managing invitations, using said access authorization token.

2. Method according to Claim 1, **characterized in that** it comprises a step of storing, by means of said device for managing invitations, said at least one generated invitation with respect to at least a second user.

3. Method according to either of Claims 1 and 2, **characterized in that** said generation step comprises, for each invitation generated in said generation step:
• a sub-step of validating, by means of the privilege server (103) connected to said first device (101) for managing invitations, a level of access defined in said invitation to allow said second user to access said at least one service;
• a sub-step of storing, by means of said privilege server (103), of at least one item of information that is representative of said at least one second user, associated with at least one item of information that is representative of a validated level of access to allow said second user to access said service.

4. Method according to any one of Claims 1 to 3, **characterized in that** in said generation step, said generated invitation is associated with a personal identifier belonging to said second user.

5. Method according to any one of Claims 1 to 4, **characterized in that** said transmission step is performed by said first device for managing invitations, while taking at least one communication identifier belonging to said second user into account.

6. Method according to any one of Claims 1 to 5, **characterized in that** said at least one invitation is transmitted to said second device (105) for managing invitations within a predetermined data structure.

7. Method according to any one of Claims 1 to 6, **characterized in that** said verification step comprises a prior sub-step of authenticating said second server.

8. Method according to any one of Claims 3 to 7, **characterized in that** it comprises a step of checking the validity of said access authorization by means of said at least one service with the aid of the privilege server.

9. Method according to Claim 8, **characterized in that** it comprises, upon a request to modify a previously transmitted message, a step of said first device for managing invitations transmitting a message for updating said previously transmitted invitation to said second device for managing invitations, so as to modify access permissions previously defined in this invitation by said first user for said second user.

10. System for at least a second user to access at least one service provided by a first user, **characterized in that** it comprises:
• a first device (101) for managing invitations belonging to the first user, for generating at least one invention allowing said at least a second user to access said at least one service, said invitation comprising a level of access specific to said at least one service, said level of access being defined by said first user for said second user;
• a privilege server (103);
• a second device (105) for managing invitations belonging to a second user, configured to receive one said invitation transmitted by the first device (101) for managing invitations and for delivering said invitation to the privilege server (103),
the privilege server being configured to verify the content of said invitation so as to deliver, to said second user, an access authorization token for accessing said at least one service, taking said level of access into account,
the second device (105) for managing invitations being configured to request access to said at least one service using said access authorization token.

11. System according to Claim 10, **characterized in that** the first device for generating invitations is capable of collaborating with the privilege server (103) in order to generate said at least one invitation to access said at least one service destined for at least a second user.

12. Computable program product that is downloadable from a communication network and/or stored on an information storage medium that is readable by computer and/or executable by a microprocessor, **characterized in that** it comprises code instructions for executing a method for at least a second user to access at least one service provided by a first user according to any one of Claims 1 to 9.
